# EUROPEAN PATENT APPLICATION

(11) **EP 2 197 155 A1**
(43) Date of publication of application: **16.06.2010**
(21) Application number: 08291172.8
(22) Date of filing: 12.12.2008
(51) Int. Cl.: H04L 12/24, H04L 12/56, H04L 12/28

(54) **A module and associated method for path information**

(71) Applicant: Alcatel Lucent, 75008 Paris (FR)
(72) Inventor: Vermoesen, Luc, 2880 Bornem (BE); Stevens, Christoph, 9190 Stekene (BE); Justen, Pascal M.E.J., 1150 Sint-Pieters-Woluwe (BE); Liekens, Werner M., 2860 Sint Katelijne Waver (BE); Acke, Willem J.A., 2820 Rijmenam (BE)
(74) Representative: Vandenbroeck, Josiane Anne Marie

(57) **Abstract**

A path information module to impose update of path information for use in a home network segment comprising a plurality of devices. The path information module comprises a device detector module for detecting a new device in the home network segment and for triggering a reachability bundle module by means of an informing message. The path information module further comprises the reachability bundle module for sending a polling invocation message to a polling action module of the new device. The polling action module is sending, upon reception of the polling invocation message, a polling action message to other devices in the home network segment to impose thereby update of its path information. Optionally, the reachability bundle module is extended for sending a similar polling invocation message, at predetermined time moments, to one of the devices, whereby this device transmits a similar polling action message to other devices in the home network segment to impose thereby update of path information at the other devices. (Figure 1).

## Description

The present invention generally relates to building up network topology in a home network.

The Universal Plug and Play UPnP™ Forum is an industry initiative designed to enable simple and robust connectivity among consumer electronics, intelligent appliances and mobile devices from many different vendors.

UPnP technology defines an architecture for pervasive peer-to-peer network connectivity of intelligent appliances, wireless devices, and PCs of all form factors. It is designed to bring easy-to-use, flexible, standards-based connectivity to ad-hoc or unmanaged networks whether in the home, in a small business, public spaces, or attached to the Internet. UPnP technology provides a distributed, open networking architecture that leverages Transmit Control Protocol over Internet . Protocol TCP/IP and the Web technologies to enable seamless proximity networking in addition to control and data transfer among networked devices.

When considering a network or network segment, obtaining the physical and/or Layer2/Layer3 topology of a home network offers several opportunities such as remote management.

One way of topology establishment is to inspect Layer 2 information such as Address Resolution Protocol ARP / Forwarding tables and to interrogate the different devices about their configuration with a protocol such as e.g. Simple Network Management Protocol - Management Interface Base II, shortly called SNMP MIB II. Another way to establish the topology is by using UPnP Service Invocations such as with e.g. the UPnP message "GetQosDeviceCapabilities".

Currently, a UPnP QosManager component is described in the different UPnP versions, respectively, the QosV2 specification, to be found at http://www.upnp.org/specs/gos/UPnP-qos-Architedure-v2-20061016.pdf, describes the QosManager component in Chapter 4.2 .... ; or the UPnP QosVl specification to be found at
http://www.upnp.orQ/standardizeddcps/documents/UPnP QoS Archit ecturel.pdf, describes the QosManager Component in paragraph 4.2.

According to these versions, the UPnP QosMonager component needs to establish path topology in the event when e.g. UPnP QosV2, UPnP SetupTrofficQos, UPnP ReleaseTrafficQos or UPnP AdmitTrafficQos are invoked. Hereby, the QosManager collects information from the different QosDevices and concludes on a topology with a path between source and destination of a requested QoS Stream. However, the QosManager might conclude based upon incorrect topology information due to obsolete/incomplete information at the QosDevices.

An object of the present invention is to provide a path information module to impose update of path information for use in a home network segment and a related method. This path information module is applicable in part of the home network i.e. a home network segment or the complete home network.

According to the present invention, this object is achieved due to the fact that the path information module comprises:
- a device detector module for detecting a new device in the home network segment and for triggering a reachability module with an informing message; and
- the reachability module for sending a polling invocation message to a polling action module of the new device; and
- the polling action module for sending, upon reception of the polling invocation message, a polling action message to at least one sink device of the plurality of devices to impose thereby update of path information at the sink device or intermediate devices.

Indeed, although when there has been no communication exchanged between a source QosDevice and a sink QosDevice, due to the polling action message according to this present application, communication is imposed between the different devices in the home network. Hereby the sink QosDevice is enabled to update its path information.

In order to detect the correct Layer2 topology and related physical topology, communication must flow in logical full mesh so that all devices part of the home network have their ARP/forwarding tables filled with up to date data. This is realized by imposing communication between the devices by means of the polling action message of the polling action module which is a consequence of the polling invocation message received by this polling action module.

Optionally, the polling action message also imposes update of path information at any intermediate device along a path of the polling action message between the new device and the sink device. The described solution provides hereby data communication between all known devices in the home network or home network segment. Due to this regular coordinated communication between all devices in the home network segment, network topology information can be accurately obtained. Correct Topology establishment is enabled whereby a base is set for other information related to topology such as diagnosis, bandwidth plan, etc.

In addition, the polling action message might invoke a reply message from the sink devices to the new device to inform the new device about actual reachablility of the sink device and to impose thereby update of path information at the new device as well.

Optional, in order to perform the detecting, the device detector module is comprised to receive, upon subscription to a Universal Plug and Play technology Base Driver, a notification of the Universal Plug and Play technology Base Driver of a registration of a new device at said Universal Plug and Play technology Base Driver. Indeed, according to such an implementation, the device detector module is enabled to subscribe with a UPnP Base Driver for reception of a notification in the event of a registration of a new device at the respective UPnP Base Driver. In the event when a new device registers itself at the UPnP Base Driver, the UPnP Base Driver will indeed notify the Device Detector Module about this registration fact by means of an event. It has to be remarked here that this notification comprises as well the references of the new device.

In this way all UPnP enabled devices can be detected through subscription for an UPnP service that informs about UPnP Qos Device registration/deregistration. In this way a functional component that offers Layer 2 communication with other devices and that has a configuration Application Programming Interface API is provided.

According to such a UPnP implementation, the UPnP enabled network elements are extended with new UPnP messages i.e. the UPnP QosDevices are extended with a polling invocation action message called e.g. PollOthersAction and with a polling action message called e.g. PollAction. When such a UPnP QosDevice receives a polling invocation action request the QosDevice will need to invoke the polling action message i.e. the QosDevice needs to send a service request.

It has to be remarked that optionally, the polling action message comprises a list of devices in order to determine the at least one sink device of the available plurality of devices. This list might comprise all known devices or only a predefined part of the known devices. According to such an implementation the list of QosDevices is included as parameter in the polling invocation message. The QosDevice will need to invoke a polling action message on each of the devices in the list.

Optionally, when a sink UPnP QosDevice receives a polling action from an initiator QosDevice, the sink QosDevice will need to send a reply back to the initiator QosDevice such as e.g. L2 arp-ping, L3 icmp echo request reply or other reachability checking means.

According to a complementary and/or alternative possible implementation, the device detector module is implemented by means of a software component that scans for new device communication in the home network segment and that thereby executes the detection of a new device. Indeed, by using specific Layer2/Layer3 technology through e.g. traffic snooping, or by using Address Resolution Protocol ARP protocol, or by using Asynchronous Transfer Mode-ARP ATMARP, or by using Internet Control Message Protocol messages such as the ICMP "Echo request" and "Echo reply' messages, or by using other options, a new device can be detected in the home network segment. Such a software component snoops the Layer 2 addresses in traffic on one physical interconnection in the home network segment and detects hereby possible new devices.

Optionally, the device detector module is distributed in the home network segment so that all communication into the network can be snooped. As an example, a software component might be distributed in the home network segment. Furthermore, client software might be installed on the polling action module whereby the polling action message is provided e.g. by means of Layer 2/Layer 3 or upper communication. Indeed, by means of some client software that runs on the devices the required Layer communication towards all other devices is provided. This could be implemented by means of e.g. ping and/or arp-ping etc.

Furthermore, as mentioned above, the reachability bundle module is optional extended for sending a similar polling invocation message, at predetermined time moments, to one of the devices, whereby this one device transmits a polling action, similar to such above mentioned polling action message to other devices in the home network segment to impose thereby update of path information at the other devices. Indeed, when the data flows occur in regular intervals the deprecation of Layer 2 information is prevented or kept up to date. The advantage of a regular scheme is that an interconnectivity scheme at Layer 2 can be established and used to build up the physical and/or network topology. So, hereby the selected device imposes update of path information at the other devices. At regular time intervals e.g. in a round robin scheme, the reachability bundle triggers one QosDevice out of the list of all known devices for a polling action message with optionally giving the list of all known devices as a parameter. The triggered QosDevice on its turn invokes a polling action message to all devices in the list.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

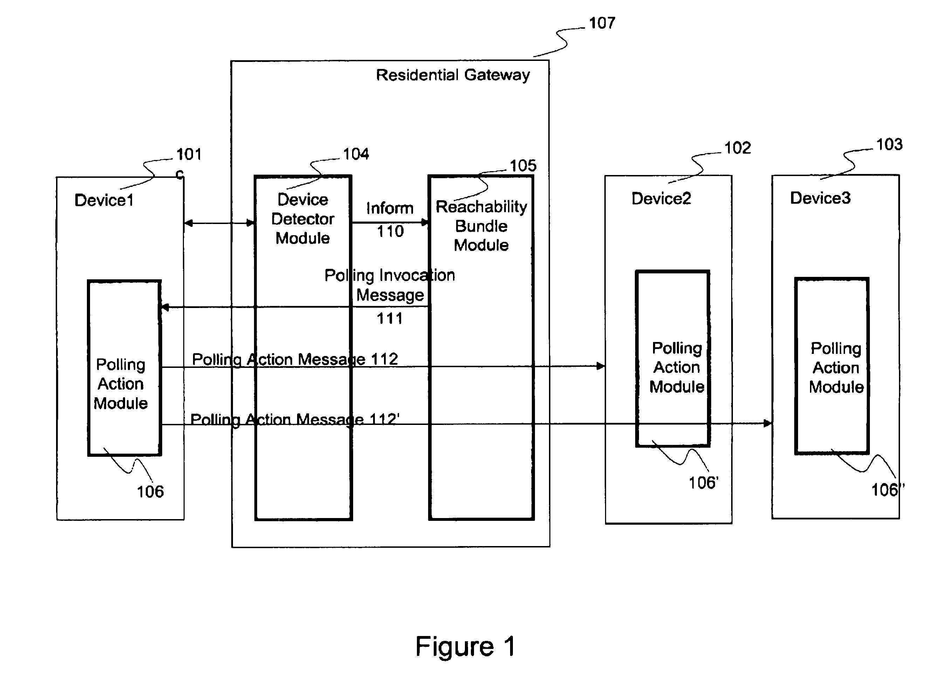

The above and other objects and features of the invention will become more apparent and the invention itself will be best understood by referring to the following description of an embodiment taken in conjunction with the accompanying drawings wherein Figure 1 represents a home network segment.

The working of the device according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method for use in the home network segment will be described in further detail.

Referring to Figure 1, the shown Home network segments comprises 3 devices 101, 102 and 103, respectively, Device 1, Device 2 and Device 3; and a Residential Gateway 107. Residential Gateway comprises a Device detector Module 104 and a Reachability bundle module 105. It has to be remarked here, that the location of the Device detector module 104 and/or the reachability bundle module is not limited to a residential gateway. The Device1 further comprises a polling action module 106. Optionally, Device2 102 and Device3 103 contain a Polling Action Module, repectivley, 106' and 106", in order to respond to Polling Action Message in case the latter are proprietary.

In order to hold up on example, presume that the Device 1 is not known to the Device Detector module 104.

Two embodiments will be described: a first embodiment with UPnP enabled network elements and a second embodiment with non-UPnP enabled network elements.

The Device Detector module 104 is comprised to detect a new device in the home network segment and for triggering the reachability bundle module 105 by means of an informing message 110. As described above, in the event of UPnP enabled devices the detection can be done through subscription for a service that informs about UPnP Qos Device registration/deregistration. Furthermore, other devices could be detected by using specific Layer2/Layer3 technology.

A state-full reach-ability software bundle contains a UPnP Control Point and is installed in an UPnP Entity that is comprised in the Device detector Module 104. Since the Device Detector Module 104 needs to keep track of all devices in the home network segment, it subscribes therefore, at the address of a UPnP Base Driver (not shown), to be triggered upon:
- Qos device register/unregister events
- PathInformation state change events

Additionally the Device Detector Module 104 can use other Layer2/Layer3 protocols and technologies such as arp, icmp-echo request/reply, traffic snooping, proxying in order to determine the existence of any devices in the home network.

So, initially the Device Detector Module 104 subscribes for device registration/deregistration events with the UPnP Base Driver. When a new device such as e.g. Device1 101 registers with the UPnP Base Driver Bundle, the Device Detector Module 104 is notified by the UPnP Base Driver of device registration. The reachability bundle module 105 gets notified by the device detector module 105 by means of an informing message 101. The reachability bundle module 105 invokes hereby a polling invocation message 111 such as e.g. a PollOthersAction message with a list of all known Devices in the network e.g. Device2 102 and Device3 103, towards a polling action module 106 of the new device Device1 101. Hereby the polling action module 106 of the newly registered QosDevice Device1 101 invokes a polling action message 112 and 112' such as e.g. a PollAction on each of these devices in the list. It has to be remarked that the information that has been passed in this way is a reference to the device and its interface specifications such as the IP address and/or the MAC address.

Additionally, the polling action module 106' and 106"of each sink Device2 102 and Device3 103 responds upon the Polling Action Message with a reply. Indeed, sending a ping/message such as e.g. an icmp echo request, leads to a reply being sent from sink device to the sender e.g. an icmp reply message.

Furthermore, at regular intervals and in a round robin scheme, the reachability bundle module triggers one QosDevice such as e.g. Device2 102 out of the list of all known devices for a polling action similar to the Polling Invocation Message and provides hereby the list of all known devices as a parameter e.g. (Device1, Device3). The triggered QosDevice Device2 invokes on its turn a polling action message similar to the polling action message 112 on all the devices in the list (Device1, Device3).

According to such a scheme regular communication is provided between all UPnP Devices in the home network segment and network information such as the path information is updated on a regular base.

It has to be remarked that the Residential Gateway 107 runs e.g. a Java Virtual Machine and an OSGi platform so that the reachability bundle module 105 and 104 module can indeed be installed at the Residential Gateway. Alternatively, the Residential Gateway 107 might as well run a native application whereby the reachability bundle subscribes for QosDevice register/unregister events.

In a second embodiment a logically similar message exchange exists in the event where the Residential Gateway runs a native application for the device detector module 104 implementation. The device detector module can be implemented by means of a software component that scans for new device communication on the network such as e.g. based upon Layer2 addresses that are snooped from the traffic or orp/forwarding table inspection for new entries. It has to be remarked that due to the snooping on one physical interconnection and in addition the possible complexity of the home network, the device detector module 104 can be implemented by means of a distributed component. Hereby, all communication in the network will be snooped.

Once a device communication is detected by the device detector module 104, e.g. grotuitious orp when first connected to the network, the device detector module 104 informs the reachability bundle module by means of an informing message 110.

Upon reception of this informing message, the reachability bundle module 105 triggers the polling action module 106 of the new device Device1 101 for a polling action message by means of sending a polling invocation message 111. This polling invocation message comprises a list of all known devices. The triggered new device Device1 on its turn invokes the polling action messages 112 and 112' on all devices Device2 and Device3 respectively in the list.

In addition, at regular intervals and in a round robin scheme, the reachability bundle module 105 triggers a polling action module of one device e.g. Device3 out of the list of all known devices for a polling action giving the list of all other known devices as a parameter. The triggered polling action module of device Device3 on its turn invokes polling action messages similar to the polling action message 112 and 112' on all the devices in the list.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A path information module (104, 105, 106) to impose update of path information for use in a home network segment comprising a plurality of devices (... , 102, 103 , ...), **characterized in that** said path information module comprises :
- a device detector module (104) for detecting a new device (101) in said home network segment and for triggering a reachability bundle module (105) with an informing message (110); and
- said reachability bundle module (105) for sending a polling invocation message (111) to a polling action module of said new device (101); and
- said polling action module (106) for sending, upon reception of said polling invocation message (111), a polling action message (112) to at least one sink device of said plurality of devices (102, 103) to impose thereby update of path information at said sink device.

2. The path information module (104, 105, 106) according to claim 1, **characterized in that** said polling action message also imposes update of path information at any intermediate device along a path of said polling action message between said new device and said sink device.

3. The path information module (104, 105, 106) according to claim 1, **characterized in that** said polling action message invokes a reply message from said sink devices to said new device to inform said new device (101) about actual reachablility of said sink device and to impose thereby update of path information at said new device (101).

4. The path information module (104, 105, 106) according to claim 1, **characterized in that**, in order to perform said detecting, said device detector module (104) is comprised to receive, upon subscription to a Universal Plug and Play technology Base Driver, a notification of said Universal Plug and Play technology Base Driver of a registration of a new device at said Universal Plug and Play technology Base Driver.

5. The path information module (104, 105, 106) according to claim 1, **characterized in that**, in order to perform said detecting, said device detector module (104) is implemented by means of a software component for scanning of new device communication in said home network segment.

6. The path information module (104, 105, 106) according to claim 1, **characterized in that** said device detector module is distributed in the home network segment.

7. The path information module (104, 105, 106) according to claim 1, **characterized in that** said polling action module (106) comprises client software to provide anyone of Layer 2 communication and Layer 3 communication for implementing said polling action message (112).

8. The path information module (104, 105, 106) according to claim 1, **characterized in that** said reachability bundle module (105) is extended for sending such a polling invocation message (111), at predetermined time moments, to one of said devices (101, 102, 103 , ...), whereby said one device transmits such a polling action message (112) to other devices in said home network segment to impose thereby update of path information at said other devices.

9. The path information module (104, 105, 106) according to claim 1, **characterized in that** such a polling action message comprises a list of devices in order to determine said at least one sink device (102, 103) of said plurality of devices.

10. A method for use in a home network segment comprising o plurality of devices (... , 102, 103 , ...) for imposing updating of path information, **characterized in that** said method comprises the steps of :
- detecting by means of a device detector module (104) a new device (101) in said home network segment; and
- triggering with said device detector module (104) a reachability bundle module (105) with an informing message (110); and
- sending by means of said reachability bundle module (105) a polling invocation message (111) to a polling action module (106) of said new device (101); and
- sending by said polling action module (106), upon reception of said polling invocation message (111), a polling action message (112) to at least one sink device of said plurality of devices (102, 103) to impose thereby update of path information at said sink device.
